(19)

**Europäisches Patentamt**

**European Patent Office**

**Office européen des brevets**

(11) **EP 4 105 864 A1**

(12) **EUROPEAN PATENT APPLICATION**

(43) Date of publication:
**21.12.2022 Bulletin 2022/51**

(21) Application number: **22170464.6**

(22) Date of filing: **28.04.2022**

(51) International Patent Classification (IPC):
***G06Q 10/08*** (2012.01)

(52) Cooperative Patent Classification (CPC):
**G06Q 10/087**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.06.2021 EP 21180369**

(71) Applicant: **Tetra Laval Holdings & Finance S.A. 1009 Pully (CH)**

(72) Inventors:
• **PELLACANI, Alex**
  **41034 Finale Emilia (Modena) (IT)**

• **CORAZZARI, Gianni**
  **41032 Cavezzo (Modena) (IT)**
• **POZZA, Matteo**
  **41058 Vignola (IT)**
• **ALSINA, Emanuel**
  **41125 Modena (IT)**
• **GARUTI, Gianpaolo**
  **41124 Modena (IT)**

(74) Representative: **Tetra Pak - Patent Attorneys SE AB Tetra Pak**
**Patent Department**
**Ruben Rausings gata**
**221 86 Lund (SE)**

(54) **STOCK MANAGEMENT SYSTEM AND METHOD IN A FILLING PLANT FOR PACKAGING POURABLE FOOD PRODUCTS INTO COMPOSITE PACKAGES**

(57)     There is described a stock management system in a filling plant (1) having at least one filling machine (6) to form composite packages (2) from a multilayer composite packaging material and to implement filling operations to fill the composite packages (2) with a pourable food product, and a warehouse (20) with a stock of packaging material elements (5) to be used for forming the composite packages (2). The system envisages: a first tag element (24) provided on a storing unit (22) of a plurality of the packaging material elements (5), storing first stock information about the packaging material elements (5) stored therein; a second tag element (26) provided on each packaging material element (5), storing second stock information about the related packaging material element (5); and a processing arrangement (12, 16), to receive operating data from the at least one filling machine (6) relating to the filling operations and to merge the first and second stock information with the operating data for management of the stock of packaging material elements (5) .

FIG.1

**Description**

TECHNICAL FIELD

The present invention relates to a stock management system and method in a filling plant for the packaging of pourable food products into composite packages.

BACKGROUND ART

As is known, many liquid or pourable food products, such as fruit juice, UHT (ultra-high-temperature treated) milk, wine, tomato sauce, etc., are distributed and marketed in composite packages made of a multilayer composite packaging material.

A typical example is the parallelepiped-shaped package for pourable food products known as Tetra Brik Aseptic™, which is made by sealing and folding a laminated strip packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Composite packages of this sort are normally produced within fully automatic filling (or, also denoted as, packaging) plants, which at least form the composite packages starting from a web of multilayer composite packaging material (wound from a reel) and fill the composite packages with the pourable food product.

A typical filling plant comprises at least a filling machine, which forms the composite packages from the multilayer composite packaging material and fills the composite packages with the pourable food product. Additionally, filling plants may also comprise downstream treatment equipment, receiving the composite packages from the filling machine and executing additional treatments on the composite packages; the downstream treatment equipment may for example comprise one or more of a buffer unit for temporarily buffering the composite packages; an application unit for applying e.g. straws on the composite packages; a grouping unit, e.g. a palletizer unit, for grouping a plurality of composite packages together in a storing unit (such as a pallet).

It is known that in a filling plant, various different types and formats of composite packages can be filled with various kind of pourable food products.

Proper management of warehouse stocks, for example of packaging material reels from which the packaging material web is wound, so as to optimize productivity and minimize waste, is therefore a commonly felt need in such filling plants.

In particular, the present Applicant has realized that it is generally difficult to track and prevent possible wastes of packaging material, e.g. with partially used or totally unused reels having an expired best before date, which cannot be used for the filling operations and have to be properly disposed of.

Moreover, for safety and quality reasons, it is a commonly felt desire to have proper traceability of the packaging materials used for the filling or packaging operations. The present Applicant has realized that it is generally a difficult task to provide the desired traceability of the used packaging materials.

Even though known filling plants operate satisfyingly well, the present Applicant has therefore realized that a need is felt for an improved solution for warehouse stock management.

DISCLOSURE OF INVENTION

It is therefore an object of the present solution to provide an improved system and method for stock management in a filling plant, which allows to solve at least part the above-mentioned inconveniences.

According to the present solution, a stock management system and method are therefore provided, according to the appended claims.

BRIEF DESCRIPTION OF THE DRAWINGS

A non-limiting embodiment of the present invention will be described by way of example with reference to the accompanying drawings, in which:

- Figure 1 is a schematic representation of a filling plant, having a stock management system according to an embodiment of the present solution;
- Figures 2-4 show tables containing exemplary stock management information used in the stock management system of Figure 1; and

- Figure 3 is a diagrammatic flow diagram of operations performed by the stock management system of Figure 1.

BEST MODE FOR CARRYING OUT THE INVENTION

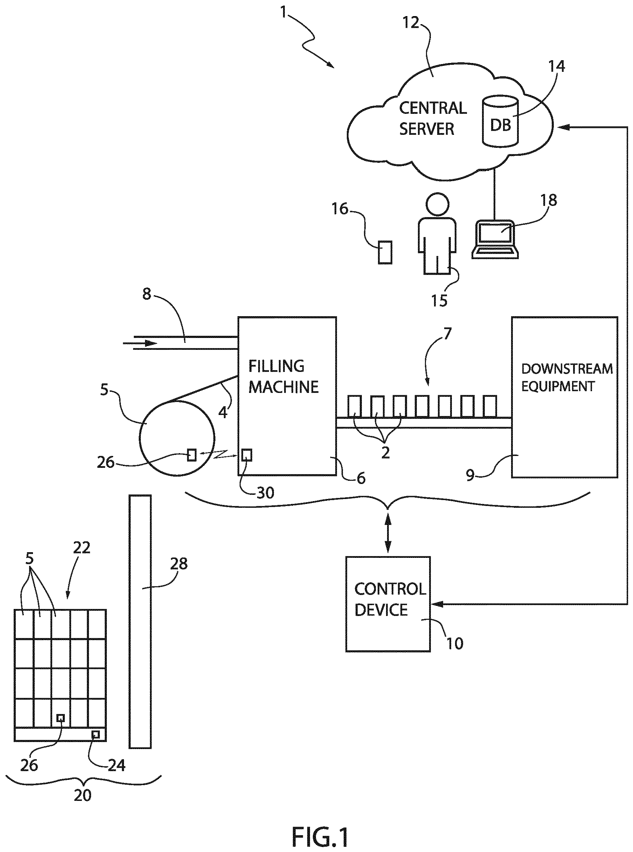

Figure 1 schematically shows a filling plant 1 for packaging of a pourable food product, in particular a liquid food product, such as milk, cream, fruit juice, wine, tomato sauce, sugar, salt, emulsions, solutions containing solid particles (e.g. legumes), etc., into composite packages 2 formed from a multilayer composite packaging material.

Multilayer composite packaging material may comprise at least a layer of fibrous material, such as e.g. a paper or cardboard layer, and at least two layers of heat-seal plastic material, e.g. polyethylene, interposing the layer of fibrous material in between one another. One of these two layers of heat-seal plastic material defines an inner face of the composite packages 2 eventually contacting the pourable food product packaged within the same composite packages 2.

Multilayer composite packaging material may also comprise a layer of gas- and light-barrier material, e.g. aluminum foil or ethylene vinyl alcohol (EVOH) film, in particular being arranged between one of the layers of the heat-seal plastic material and the layer of fibrous material. Preferentially, multilayer composite packaging material may also comprise a further layer of heat-seal plastic material being interposed between the layer of gas- and light-barrier material and the layer of fibrous material.

According to the specific embodiment disclosed and shown in reference to Figure 1, multilayer composite packaging material is provided in the form of a web 4, in particular being wound up on a packaging material reel 5, from which it is fed into a filling machine 6.

Filling machine 6 is operatively coupled to the packaging material reel 5 and is configured to process the web 4 so as to obtain composite packages 2 and to fill the same composite packages 2 with a pourable food product, which is received from an inlet duct 8 (fluidically coupled, in a way not shown here, to a tank or similar storage element).

In more detail, web 4 may comprise a succession of connected blanks. In particular, the blanks are defined by a succession of repeated patterns provided on web 4 of multilayer composite packaging material, preferably each pattern defining at least partially the aesthetical appearance of the finalized composite package 2.

Alternatively, multilayer composite packaging material may be provided in the form of single package blanks, which, in use, are singularly formed and filled.

Each composite package 2 may extend along a longitudinal axis, having a longitudinal seam portion (extending along the respective longitudinal axis) and a pair of transversal sealing bands, in particular a transversal top sealing band and a transversal bottom sealing band. In particular, each composite package 2 may have a substantially parallelepiped structure.

Furthermore, each composite package 2 may comprise at least two transversal walls (being transversal to the respective longitudinal axis) and being disposed at opposite sides of composite package 2 and a plurality of lateral walls extending between the transversal walls.

More specifically, one respective transversal wall of each composite package 2 may define a bottom wall and the other respective transversal wall defines a top wall. In particular, the bottom wall may define a support surface adapted to be placed on a (horizontal) plane, such as e.g. a shelf within a distribution point, and the top wall is opposed to the bottom wall.

In a known manner (not detailed nor shown herein), the filling plant 1 may also comprise a pourable food product conditioning device for conditioning the pourable food product. The pourable food product conditioning device may be connected to filling machine 6 so as to direct the pourable food product to the filling machine 6 via the inlet duct 8.

In more detail, filling machine 6 may comprise at least:

- a conveying device for advancing web 4 of multilayer packaging material along an advancement path;
- a tube forming device for forming a tube from the advancing web 4 of multilayer packaging material;
- a sealing device for longitudinally sealing the tube;
- a filling device, coupled to the inlet duct 8, for filling the tube with the pourable food product; and
- a package forming unit for forming the tube and to transversally seal the tube for forming composite packages 2 from the tube filled with the pourable food product.

In more detail, the package forming unit may comprise at least:

- a forming device configured to form, transversally seal and transversally cut the tube for obtaining composite packs, in particular pillow packages; and
- a final folder configured to receive the composite packs from the forming device and to form composite packages 2 from the composite packs, in particular the pillow packages.

In even more detail, the forming device may comprise a plurality of pairs of one respective operative assembly and one respective counter-operative assembly, each operative assembly and each counter-operative assembly being configured to form and transversally seal and cut in cooperation the tube for forming one respective composite pack.

Additionally, the forming device may also comprise a conveying unit configured to advance the operative assemblies and the counter-operative assemblies along respective conveying paths. The respective operative assemblies and the respective counter-operative assemblies of each pair are configured to cooperate with one another for forming and transversally sealing and cutting the tube when advancing along respective operative portions of the respective conveying paths.

Moreover, each pair of one respective operative assembly and one respective counter-operative assembly comprises at least one respective transversal sealing unit configured to transversally seal, in use, the tube.

Additionally, filling machine 6 may also comprise:

- a sterilization device arranged upstream from the tube forming device along the advancement path and configured to sterilize (e.g. by means of physical and/or chemical sterilization) the web 4 of multilayer composite packaging material.

As shown in Figure 1, filling plant 1 may further comprise downstream processing equipment 9, which is configured to receive the composite packages 2 from the filling machine 6 via a conveying device 7 and which execute additional treatments on the same composite packages 2, such as: printing information (such as a best before date and/or a lot number) and/or pictures (e.g. graphical representations, barcodes, QR codes, data matrixes, logo, symbols, etc.); applying straws on the composite packages; grouping a plurality of composite packages together into a storing unit, e.g. into a pack or pallet.

Moreover, filling plant 1 comprises a control device 10, for example including a PLC (Programmable Logic Controller) or similar processing and computing unit, configured to control general operation of the same filling plant 1 and in particular to set operational parameters of the filling machine 6 and downstream processing equipment 9.

The control device 10 is operatively coupled, e.g. via the Internet and/or an internal network, to a central server 12, e.g. a cloud server or a physical server at the plant site (which can also be accessed by an external network), where operating data and information relating to the filling plant 1 are received and stored in a database (DB) 14.

As shown in the same Figure 1, an operator 15 of the filling plant 1, having a portable or mobile device 16 (e.g. a smartphone, a tablet, a phablet or similar), is able to access the central server 12 and database 14, via a software application ("app"), in order to have access to and retrieve the operating data and information relating to the operation of the filling plant 1.

The operator 15 may also communicate with the central server 12 via a fixed computer 18 (or similar processing apparatus), provided with a suitable graphical user interface; in a manner not shown, the computer 18 may also be part of the control device 10 of the filling plant 1.

The same operator 15 is also able to interact with the control device 10, either directly or through the mobile device 16.

The filling plant 1 moreover comprises a storage or warehouse 20, where packaging material is stored, when not in use in the filling machine 6 and/or downstream processing machine 9. In particular, packaging material reels 5 are stored grouped on pallets (or similar grouping or storing units) 22, of which only one is shown, as an example, in Figure 1.

According to an aspect of the present solution, a stock management system in the filling plant 1 envisages provision on each pallet 22 of a first identification or tag element 24, which is configured to be detected (read) in a contactless (or wireless) manner and is configured to store first stock information relating to the pallet 22 and its content, in particular relating to all the packaging material reels 5 which are carried by the same pallet 22.

First tag element 24 is physically arranged on the pallet 22, coupled thereto at any suitable position, so as to be accessible for reading.

First tag element 24 may be of a passive or active type, for example being a radio tag or beacon, in particular a RFID (Radio Frequency Identification) tag having (in a known manner here not discussed in detail) a communication antenna and a storing unit for storing the first stock information. According to different embodiments, the first tag element 24 may be a NFC (Near Frequency Communication) tag or a BLE (Bluetooth Low Energy), Wi-Fi or UWB (Ultra Wideband) beacon.

As an alternative, or in addition, the first tag element 24 may include an image code (such as a 2D or 3D barcode, a QR code or similar) and/or an image, to convey at least part of the first stock information; the same image code may also be printed or otherwise applied on the pallet 22.

According to an aspect of the present solution, the first stock information stored in the first tag element 24 include an identification (e.g. a EAN, European article number, identification code, a serial number or any unique identifier) of the pallet 22 and moreover information about each packaging material reel 5 carried by the pallet 22, which comprise one or more of the following: a production order; an identification (e.g. EAN) code; a best before date; a number of packages that can be produced, for the respective packaging material reel 5 (other information and parameter can also be included in the first tag element 24, the above list being exemplary and not exhaustive).

According to a further aspect of the present solution, the stock management system in the filling plant 1 moreover envisages provision on each packaging material reel 5 of a respective second tag element 26 (only one of which is shown in Figure 1, for clarity of depiction), which is also configured to be detected (read) in a contactless (or wireless) manner and is configured to store second stock information relating to the respective packaging material reel 5.

Also the second tag element 26 may be of a passive or active type, for example being a radio tag or beacon, in particular a RFID tag, or a NFC tag or a BLE, Wi-Fi or UWB beacon, having (in a known manner here not discussed in detail) a communication antenna and a storing unit for storing the second stock information.

As an alternative, or in addition, also the second tag element 26 may include an image code and/or an image (such as a 2D or 3D barcode, a QR code or similar), to convey at least part of the second stock information.

The second tag element 26 is physically arranged at any suitable location on the packaging material reel 5 (e.g. at a core thereof), so as to be accessible for reading.

According to an aspect of the present solution, the second stock information stored by the second tag element 26 include an identification (e.g. a EAN identification code) of the packaging material reel 5 and one or more of the following: a production order; a best before date; a number of packages produced, packages wasted, or packages left (i.e. a counter of the packages that may still be produced using the specific packaging material reel 5); and an indication of the filling machine(s) 6 that used the packaging material for the packaging operations.

In particular, the number of packages left is a variable counter, which is updated based on the actual use of the packaging material reel 5 in the filling plant 1 for the packaging operations.

The identification (e.g. EAN) code of the packaging material reel 5 may be indicative of the specific multilayer composite packaging material and/or composite packages 2 to be formed from the specific multilayer composite packaging material.

Identification code may also be indicative of one or more of the following: a volume of the finalized composite packages 2 (formed from multilayer composite packaging material and filled with the pourable food product); a volume of the pourable food product filled within the finalized composite packages 2; the pourable food product and its characteristics (such as the kind of the pourable food product); recipe information; details of the multilayer composite packaging material; the repeated pattern printed on multilayer composite packaging material; a type and/or format of finalized composite packages 2; the name of the producer, commissioner or distributor of composite packages 2; indications about the target market.

According to a possible embodiment, the information content in the first tag element 24 can be written/updated automatically, as soon as each packaging material reel 5 is placed on the pallet 22; for example, a wireless communication can be implemented between the first and second tag elements 24, 26, which is activated by their proximity when the packaging material reels 5 are placed in the pallet 22.

Alternatively, information content may be written with the intervention of an operator 15, who, using a dedicated function on a handheld device (e.g. the same mobile device 16), is able to scan the second tag elements 26 of the packaging material reels 5 that are included in the pallet 22 and then cause the whole data to be written in the first tag element 24 of the same pallet 22 (as the first stock information).

In particular, writing/updating of the first tag element 24 in the pallet 22 can be implemented both in the converting factory (i.e. after the packaging material reels 5 have been assembled and arranged in the pallet 22 for shipping to a customer) and at the customer site (i.e. at the filling or packaging plant 1), in case the customer would like to store different packaging material reels 5 (for example, partially used reels) on a specific pallet 22 by doing a reset/update of the information stored on the "built-in" first tag element 24.

As shown in the same Figure 1, the filling plant 1 may comprise a gate 28, e.g. arranged at the warehouse 20, and provided with a suitable detection unit configured to: read the first stock information stored in the first tag element 24 of the pallets 22 that are stocked in the same warehouse 20; and transmit the stock information having been read to the central server 12, to be stored in the database 14 (in association with the corresponding filling plant 1).

In addition, or as an alternative, the first tag element 24 of the pallets 22 that are stocked in the warehouse 20 may be read by the operator 15, with a suitable reader (e.g. a RFID tag reader) or with the same portable or mobile device 16, in case it is configured for reading the first tag element 24 (for example, in case the first tag element 24 includes a barcode or QR code).

As shown in the same Figure 1, a further aspect of the stock management system in the filling plant 1 requires the filling machine 6 to be configured, e.g. having a respective detection unit 30, such as a RFID tag reader, to read the second tag element 26 of the packaging material reel 5 that is operatively coupled to the same filling machine 6, during the packaging operations.

Control device 10 may be configured to set operational parameters of the same filling machine 6, as a function of the identification code of the packaging material reel 5 included in the second tag element 26.

These operational parameters may include one or more of the following: operational parameters of the conveying device, such as an advancement speed of web 4; operational parameters of the tube forming device; operational parameters of the sealing device such as a sealing power; operational parameters of the filling device such as a flow rate; operational parameters of the package forming unit such as a sealing power of the transversal sealing units, an advancement rate of the operative assemblies and counter-operative assemblies, a hit position at which, in use, operative assemblies and/or counter-operative assemblies start to contact the tube; operational parameters of the sterilization device.

Moreover, due to the fact that packaging material information are saved on the second tag element 26, an interlock functionality with actual filling machine data may be implemented to prevent the use of wrong packaging material reels 5 in the filling machine 6. For example, use of packaging material with expired best before date, or with characteristics that do not match with the product order, can be automatically prevented and avoided by the control device 10.

Control device 10 may also be configured to allow for a modification of one or more of the above operational parameters by the operator 15, after the automatic setting of the same operational parameters. In this manner, the operator 15 may have the possibility to correct and/or optimize some of the operational parameters; such a modification may also be possible during the formation and filling of composite packages 2.

More specifically, at least some or all of the operational parameters may define production conditions of all or at least some portions of the filling plant 1. Additionally or in alternative, at least some or all of the operational parameters may define a quality control protocol for determining and/or controlling the quality of composite packages 2, a test plan for assessing, in use, hygienic information during the formation and the filling of composite package 2, a cleaning-in-place protocol, a sterilization-in-place protocol.

Operation of the stock management system in the filling plant 1 thus envisages reading of the first stock information stored by the first tag element 24 on the pallets 22, in order to retrieve the information relating to the packaging material available in the filling plant 1.

In particular, reading of the first tag element 24 on the pallets 22 is performed (automatically by the gate 28, or with the intervention of the operator 15) when the pallets 22 are first received by the customer and introduced in the filling plant 1, e.g. in the warehouse 20. Stock information relating to every packaging material reel 5 (like production order, EAN code, best before date, number of packages that may be produced, etc.) included in the pallet 22 are therefore retrieved and conveniently transmitted to the central server 12 and stored in the database 14.

Moreover, further reading of the first tag element 24 may be performed periodically on the pallets 22 that are stored in the warehouse 20, so as to have updated information on the available packaging material, in particular regarding any remained or leftover packaging material reels 5 (i.e. packaging material reels 5 that have been only partially used for past production orders).

The operator 15, accessing the central server 12 (e.g. via the software application on the mobile device 16) is thus able to monitor the resources available, schedule the future productions and the provisioning of new packaging material. Advantageously, when planning or starting a new production, the application may provide to the operator 15 the list of the available (new or only partially used) packaging material reels 5 suitable for that production. This allows to ensure that all available packaging material reels 5 are used, avoiding any waste of material; time and cost saving optimization criteria may also be implemented by the application to automatically determine and provide to the operator 15 the lists of packaging material reels 5 to be used.

Moreover, at the converting factory (or producer) side, accessing the information stored in the database 14 in the central server 12 allows to understand if the pallets 22 have been properly delivered, the receiving time and the proper location of the customer site. In case of any misalignment, such as a packaging material reels 5 being delivered to the wrong site, or with an expired best before date, this can be detected immediately. In case the customer is paying only the number of packages produced or only the good packages (independently from the number of packaging material reels 5 received and used), this also allows the converting factory to be sure that the customer received specific packaging material reels 5 and to track possible packaging material waste (with partially used and/or totally unused reels).

In addition, operation of the stock management system in the filling plant 1 envisages that the filling machine 6 detects (reads) the second tag element 26 on the currently used packaging material reel 5 and automatically logs data regarding filling operations and transmit these data to the central server 12, for storing in the database 14 in association with the same packaging material reel 5 (logging of data can be performed at regular intervals or at certain occasions, e.g. at midnight, at each change of speed or volume of product, etc.).

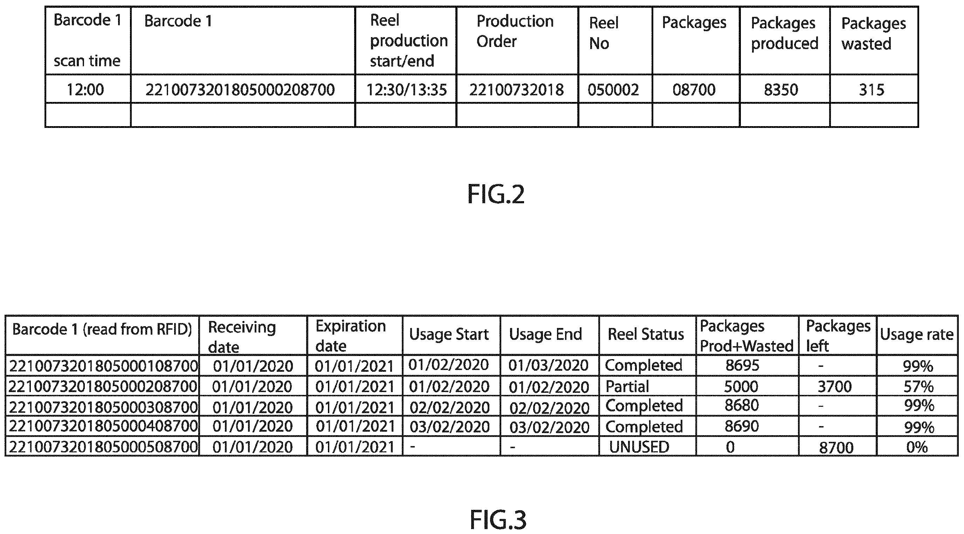

In particular, and as schematically shown in Figure 2, for each packaging material reel 5, which is identified (automatically by the filling machine 6 or by intervention of the operator 15) via the second tag element 26, the data stored include one or more of: a scan time; the start and end time of each production using the specific packaging material reel 5; the production order; the reel number; the total number of packages available in the reel; the number of packages produced; and the number of packages wasted.

As previously discussed, at the end of a reel usage (or at any other desired time, e.g. after each packaging material splice), the second tag element 26 of the packaging material reel 5 having been used is advantageously updated, in particular with respect to the package count, reflecting the total number of packages produced and wasted (other information may also be updated or written, such as the above discussed start and end of production and an identifier of the corresponding filling machine 6).

In particular, a usage rate of the packaging material reel 5 can be determined, as follows:

$$usage\ rate = \frac{packages\ produced + packages\ wasted}{target\ packages}$$

where the number of target packages corresponds to the total number of packages that are estimated to be produced starting from the full reel.

In particular, a packaging material reel 5 can be considered 'complete' (or fully used/completely utilized) if the usage rate is higher than a certain usage rate threshold, e.g., ≥ 98%; while the packaging material reel 5 can be considered as 'partially used' when the usage rate is comprised within a certain usage rate range, e.g. between 0,1% and 98%.

Based on the count of the remaining packages on a specific packaging material reel 5, it is also possible to print an updated physical label to be applied on a partially used reel, with the updated count of packages remained for that specific reel.

By merging the second stock information read from the second tag elements 26 placed on each packaging material reel 5 with the data automatically logged by the filling machine 6 relating to the filling operations, the stock management system thus allows to understand if a specific reel has been used, on which machine has been used, the date and time of the reel utilization (s) and number of produced packages and packages wasted for every reel.

It is noted that this information can also be used, e.g. during a root cause analysis in case of a lack of sterility in the filled composite packages 2. Advantageously, reading of the second tag element 26 provides the operator 15 with full and immediate traceability of the packaging operations (even when the central server 12 is off-line).

Moreover, the first stock information read by scanning the first tag element 24 placed in the pallet 22 of packaging material reels 5 merged with information related to usage of every packaging material reel 5 allows for example to:

- understanding how many reels in the warehouse 20 are fully used (e.g. with usage rate ≥ 98%);
- understanding how many reels are partially used (e.g. with usage rate comprised between 0,1% and 98%);
- understanding how many reels are still full (unused);
- calculating stock time from receiving date to usage date;
- before starting a specific production run, understanding if that specific production run is feasible before starting the actual production (e.g. based on the number of full reels and partial reels with a desired identification code to match the production run);
- improving purchase of new packaging material reels 5, based on a production forecast and the actual stock in the warehouse 20.

Moreover, the stock managing system, based on the knowledge of the presence of partially used and unused packaging material reels 5, may provide a notification/alert before their expiration date in order to avoid waste of resources. Thanks to this signaling, customer can potentially decide to adjust production schedule in order to optimize the packaging material usage.

In order to avoid scrapping of partial reels, the stock management system can suggest to the operator 15 that partially used reels with a same identification code or production order of the reel in use are available (so that they can fit the current production/product) and suggest, e.g., to reuse partial reels before using full reels.

In this regard, in the warehouse 20, using a long distance reader (e.g. of the RFID type), possibly embedded in the mobile device 16 of the operator 15, it is possible to understand if a pallet 22 with a specific identification code is present so as to execute desired actions (for example, in order to recall a pallet 22 including a specific packaging material reel 5 with desired identification and product order, or for inventory purposes).

It is underlined that all of the above stock management operations can be implemented at the central server 12 and/or by the software application run at the operator's mobile device 16, based on the data stored in the database 14; the same stock management operations may also be performed at an external processing facility (in case the central server 12 is e.g. located at the customer site).

In particular, the software application on the mobile device 16 of the operator 15 may provide a suitable user interface to perform the stock management operations, providing for example information related to the fully used, partially used and unused packaging material reels 5 in the warehouse 20 (with the count of remaining packages) and suggestions to use specific packaging material reels 5 based on partial usage rates and best before date.

In addition or as an alternative, the above information and notifications can also be provided to the operator 15 through a web-based interface implemented at the central server 12.

The operator 15 with the mobile device 16 is also able to read data directly from the first and second tag elements 24, 26 on the pallets 22 and packaging material reels 5, with the read data possibly being stored and synced on the database 14 in the central server 12.

Figure 3 shows an exemplary report that may be provided to the operator 15 (e.g. via the software application), which is the result of the merging of data read from the first and second tag elements 24, 26 and the data logged by the filling machine 6 during filling operations.

This report refers to a pallet 22 storing a number of packaging material reels 5, providing identification data and usage rate data for all the reels, based on the actual production data provided by the filling machine 6.

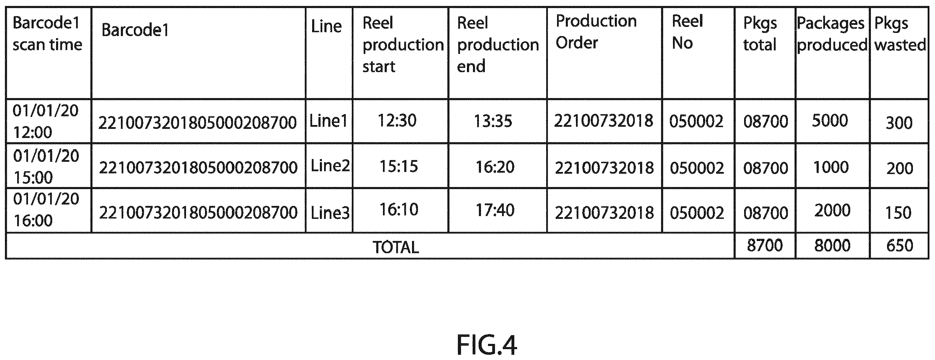

Figure 4 shows a further possible report that may be provided to the operator 15 (e.g. via the software application), again as the result of the above discussed merging of data, this time relating to a single packaging material reel 5, reporting all productions involving the same reel, specifying e.g. start and end of production, the identification of the related filling machine 2, the number of packages produced and wasted.

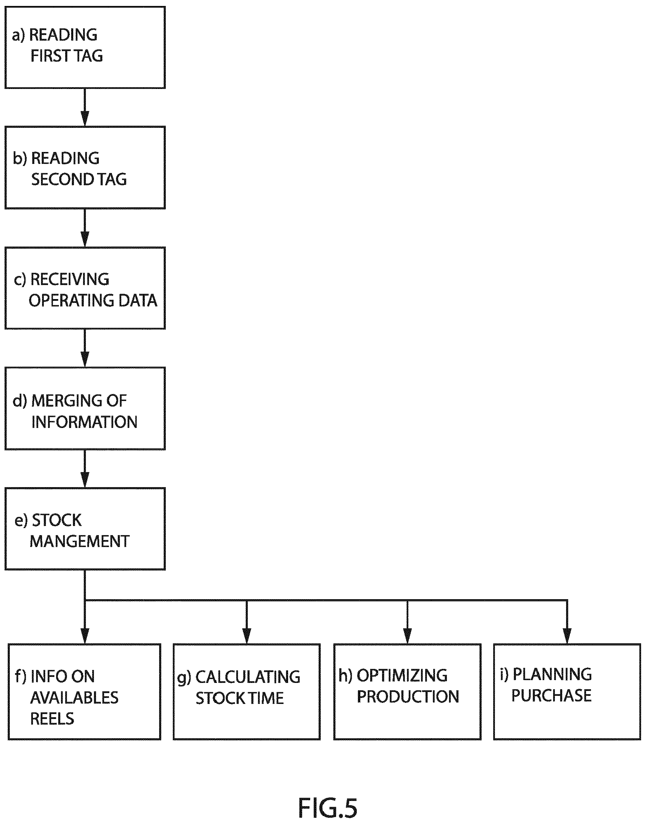

With reference to Figure 5 and to what has been previously discussed, operation of the stock management system in the filling plant 1 therefore comprises one or more of the following steps:

a) reading the first tag element 24 on the pallets 22;
b) reading the second tag element 26 on the packaging material reels 5;
c) receiving operating data from the filling machine 2;
d) merging the information read from the first and second tag elements 24, 26 and the operating data received from the filling machine 2;
e) assisting management of the stock of packaging material based on the merging of information.

In particular, the step of assisting management of the stock of packaging material includes one or more of the following steps:

f) providing information about how many reels are fully used, partially used or still unused;
g) calculating stock time from receiving date to usage date;
h) before starting a specific production run, providing indication if that specific production run is feasible and suggestions on optimized use of available packaging material reels 5 before starting that production;
i) planning packaging material reel purchase based on production forecast and available stock.

The advantages of the discussed stock management solution will be clear from the foregoing description.

In any case, it is underlined again that the proposed solution allows to improve management of the stock of packaging material in a filling plant, minimizing wastes and optimizing production.

Moreover, an improved traceability of the packaging material used for the packaging production is provided.

Moreover, using the tag element on the packaging material reels and a corresponding reader on the filling machine allows to automatically log in all the information related to the packaging material. This allows the advantages of: a reduced workload of the operator that can focus on other tasks; preventing mistakes during the insertion done by operator; eliminating the risk that identification information are not inserted causing a lack of traceability information.

Clearly, changes may be made to what described herein without, however, departing from the scope of protection as defined in the accompanying claims.

In particular, it is underlined that the discussed solution may be applied for any additional material and/or consumables used for packaging of the products into the composite packages 2, such as strips, caps, straws, etc.

As an example, the second tag element 26 may be applied to strip bobbins, used (in a known manner) to seal the composite packages 2, with the first tag element 24 being applied in this case to a box or similar housing or storing unit of the same strip bobbins.

**Claims**

1. A stock management system in a filling plant (1) having at least one filling machine (6) configured to form composite packages (2) from a multilayer composite packaging material and to implement filling operations to fill the composite packages (2) with a pourable food product, and a warehouse (20) with a stock of packaging material elements (5) for forming the composite packages (2); the system comprising:

first tag elements (24) provided on respective storing units (22) designed for storage of a respective plurality of the packaging material elements (5), each first tag element (24) including first stock information about the packaging material elements (5) stored in the respective storing unit (22);

a second tag element (26) provided on each packaging material element (5), the second tag element (26) including second stock information about the related packaging material element (5); and

a processing arrangement (12, 16) configured to: receive operating data from the at least one filling machine (6) relating to the filling operations; and merge the first and second stock information with the operating data, to implement management of the stock of packaging material elements (5).

2. The system according to claim 1, wherein the packaging material elements (5) are reels of packaging material and the storing units (22) are pallets housing a respective plurality of the reels of packaging material.

3. The system according to claim 1 or 2, wherein the first stock information stored in each first tag element (24) include an identification code of the respective storing unit (22) and moreover information about each packaging material element (5) stored by the respective storing unit (22) comprising one or more of the following: a production order; an identification code; a best before date; a total number of packages that can be produced; and wherein the second stock information stored in each second tag element (26) include an identification of the respective packaging material element (5) and one or more of the following: a production order; a best before date; a counter indicative of the packages produced, wasted and/or that may still be produced using the respective packaging material element (5), the counter being variable and updated based on the operating data from the filling machine (6); an indication of the filling machine (6) that used the packaging material element (5).

4. The system according to any of the preceding claims, wherein the processing arrangement (12, 16) comprises: a central server (12) having a database (14) configured to store the first and second stock information and the operating data; and a mobile device (16) carried by an operator (15) of the filling plant (1), operatively coupled to the central server (12) and configured to execute a stock management application for the management of the stock of packaging material elements (5).

5. The system according to claim 4, comprising a gate (28) arranged at the warehouse (20) where the storing units (22) are placed, provided with a detection unit configured to: read the first stock information stored in the first tag element (24) of the storing units (22); and transmit the read first stock information to the central server (12), to be stored in the database (14).

6. The system according to any of the preceding claims, wherein the processing arrangement (12, 16) is configured to provide information on which packaging material elements (5) are in stock and on a respective usage rate.

7. The system according to claim 6, wherein the processing arrangement (12, 16) is configured to provide, for each packaging material element (5), information on which filling machine(s) (6) the packaging material element (5) has been used; a date and time of respective filling operations; a number of produced packages and of wasted packages, based on which the respective usage rate is determined.

8. The system according to claim 6 or 7, wherein the processing arrangement (12, 16) is configured to provide at least some of the following information:

- a number of packaging material elements (5) that are fully used;
- a number of packaging material elements (5) that are partially used, with a respective count of remaining packages left;
- a number of packaging material elements (5) that are still unused, with a respective count of remaining packages left; and
- a stock time from receiving date to usage date for the packaging material elements (5),

and wherein the processing arrangement (12, 16) is further configured to provide indications on which packaging material elements (5) to use for a specific production run, based on available unused or partially used packaging material elements (5) matching the production run.

9. The system according to any of claims 6-8, wherein the processing arrangement (12, 16) is configured to provide notifications to an operator (15) of the filling plant (1) before an expiration date of unused or partially used packaging material elements (5) present in the warehouse (20).

10. The system according to any of the preceding claims, wherein the filling plant (1) comprises a control device (10) configured to control operation thereof; and wherein the filling machine (6) is configured to read the second tag element (24) on the packaging material element (5) to retrieve an identification code indicative of the related multilayer composite packaging material and/or of the related composite packages (2) and to provide the identification code to the control device (10); wherein the control device (10) is configured to automatically set operational parameters of the filling plant (1) as a function of the identification code.

11. The system according to claim 10, wherein the control device (10) is configured to inhibit the filling operations if the operational parameters associated with the identification code do not match a current production.

12. The system according to any of the preceding claims, wherein the information content in the first tag element (24) is designed to be written or updated automatically, when packaging material elements (5) are placed on the respective storing unit (22).

13. The system according to any of the preceding claims, wherein the first and second tag elements (24, 26) are RFID tags.

14. A filling plant (1), comprising a stock management system, according to any of the preceding claims.

15. The filling plant according to claim 14, wherein the filling machine (6) comprises at least:

   - a conveying device for advancing a web (4) of the multilayer composite packaging material along an advancement path;
   - a tube forming device for forming a tube from the web (4) of the multilayer packaging material;
   - a sealing device for longitudinally sealing the tube;
   - a filling device for filling the tube with the pourable food product; and
   - a package forming unit for forming the tube and to transversally seal the tube for at least partially defining the composite packages (2).

16. A stock management method in a filling plant (1) having at least one filling machine (6) configured to form composite packages (2) from a multilayer composite packaging material and to implement filling operations to fill the composite packages (2) with a pourable food product, and a warehouse (20) with a stock of packaging material elements (5) for forming the composite packages (2); the method comprising:

   reading first tag elements (24) provided on respective storing units (22) designed for storage of a respective plurality of the packaging material elements (5), each first tag element (24) including first stock information about the packaging material elements (5) stored in the respective storing unit (22);
   reading a second tag element (26) provided on each packaging material element (5), the second tag element (26) including second stock information about the related packaging material element (5);
   receiving operating data from the at least one filling machine (6) relating to the filling operations; and
   merging the first and second stock information with the operating data, to implement management of the stock of packaging material elements (5).

FIG.1

| Barcode 1 scan time | Barcode 1 | Reel production start/end | Production Order | Reel No | Packages | Packages produced | Packages wasted |
|---|---|---|---|---|---|---|---|
| 12:00 | 2210073201805000208700 | 12:30/13:35 | 22100732018 | 050002 | 08700 | 8350 | 315 |
|  |  |  |  |  |  |  |  |

## FIG.2

EP 4 105 864 A1

| Barcode 1 (read from RFID) | Receiving date | Expiration date | Usage Start | Usage End | Reel Status | Packages Prod+Wasted | Packages left | Usage rate |
|---|---|---|---|---|---|---|---|---|
| 2210073201805000108700 | 01/01/2020 | 01/01/2021 | 01/02/2020 | 01/03/2020 | Completed | 8695 | - | 99% |
| 2210073201805000208700 | 01/01/2020 | 01/01/2021 | 01/02/2020 | 01/02/2020 | Partial | 5000 | 3700 | 57% |
| 2210073201805000308700 | 01/01/2020 | 01/01/2021 | 02/02/2020 | 02/02/2020 | Completed | 8680 | - | 99% |
| 2210073201805000408700 | 01/01/2020 | 01/01/2021 | 03/02/2020 | 03/02/2020 | Completed | 8690 | - | 99% |
| 2210073201805000508700 | 01/01/2020 | 01/01/2021 | - | - | UNUSED | 0 | 8700 | 0% |

## FIG.3

| Barcode1 scan time | Barcode1 | Line | Reel production start | Reel production end | Production Order | Reel No | Pkgs total | Packages produced | Pkgs wasted |
|---|---|---|---|---|---|---|---|---|---|
| 01/01/20 12:00 | 22100732018050000208700 | Line1 | 12:30 | 13:35 | 22100732018 | 050002 | 08700 | 5000 | 300 |
| 01/01/20 15:00 | 22100732018050000208700 | Line2 | 15:15 | 16:20 | 22100732018 | 050002 | 08700 | 1000 | 200 |
| 01/01/20 16:00 | 22100732018050000208700 | Line3 | 16:10 | 17:40 | 22100732018 | 050002 | 08700 | 2000 | 150 |
| TOTAL | | | | | | | 8700 | 8000 | 650 |

FIG.4

a) READING
FIRST TAG

b) READING
SECOND TAG

c) RECEIVING
OPERATING DATA

d) MERGING OF
INFORMATION

e) STOCK
MANGEMENT

f) INFO ON
AVAILABLES
REELS

g) CALCULATING
STOCK TIME

h) OPTIMIZING
PRODUCTION

i) PLANNING
PURCHASE

FIG.5

Europäisches
Patentamt

European
Patent Office

Office européen
des brevets

# EUROPEAN SEARCH REPORT

Application Number

EP 22 17 0464

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GEORGE Q HUANG ET AL: "RFID-enabled real-time wireless manufacturing for adaptive assembly planning and control", JOURNAL OF INTELLIGENT MANUFACTURING, KLUWER ACADEMIC PUBLISHERS, BO, vol. 19, no. 6, 20 June 2008 (2008-06-20), pages 701-713, XP019644130, ISSN: 1572-8145, DOI: 10.1007/S10845-008-0121-5 * abstract * * page 706, left-hand column, paragraph 2 * * page 709, right-hand column, paragraph 2 – paragraph 3 * * page 711, left-hand column, paragraph 1 – right-hand column, paragraph 2 * | 1-16 | INV. G06Q10/08 |
| A | EP 3 725 692 A1 (TETRA LAVAL HOLDINGS & FINANCE [CH]) 21 October 2020 (2020-10-21) * paragraph [0008] * | 15 | |
| A | WO 2021/099587 A1 (BASF SE [DE]) 27 May 2021 (2021-05-27) * page 9, line 18 – page 10, line 2 * | 1,16 | TECHNICAL FIELDS SEARCHED (IPC) G06Q |

The present search report has been drawn up for all claims

| Place of search | Date of completion of the search | Examiner |
|---|---|---|
| Munich | 3 June 2022 | Herri, Edmond |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 17 0464

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2022

| Patent document cited in search report | | Publication date | Patent family member(s) | | Publication date |
|---|---|---|---|---|---|
| EP 3725692 | A1 | 21-10-2020 | CN | 113453987 A | 28-09-2021 |
| | | | EP | 3725692 A1 | 21-10-2020 |
| | | | WO | 2020212280 A1 | 22-10-2020 |
| WO 2021099587 | A1 | 27-05-2021 | NONE | | |

For more details about this annex : see Official Journal of the European Patent Office, No. 12/82